(19) Europäisches Patentamt
European Patent Office
Office européen des brevets

(11) **EP 1 522 998 A2**

(12) **EUROPEAN PATENT APPLICATION**

(43) Date of publication:
**13.04.2005 Bulletin 2005/15**

(51) Int Cl.7: **G11B 7/125**

(21) Application number: **04256174.6**

(22) Date of filing: **06.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **06.10.2003 JP 2003347209**

(71) Applicant: **Ricoh Company, Ltd.**
**Yokohama-shi, Kanagawa 222-8530 (JP)**

(72) Inventor: **Kimura, Masafumi, Ricoh Co. Ltd.**
**Tokyo 143-8555 (JP)**

(74) Representative: **Mounteney, Simon James**
**Marks & Clerk**
**90 Long Acre**
**London WC2E 9RA (GB)**

(54) **Recording power determining method, program, computer readable storage medium, recording power detemining device, and optical disk apparatus**

(57)     A recording power determining method for determining a recording power of a laser light beam emitted when recording information on a recording surface of an optical disk, includes the steps of emitting a laser light beam to a recording area on the recording surface of the optical disk in which data is recorded; obtaining a value relating to reflectivity of the recording area based on the laser light beam reflected from the recording area; obtaining a beta value based on the laser light beam reflected from the recording area; and determining the recording power of the laser light beam based on the value relating to reflectivity, and the beta value.

FIG. 6A

```
              START
                │
    ROTATE SPINDLE MOTOR        ~S501
                │
    SET SERVO-ON ONTO
    SERVO CONTROLLER            ~S503
                │
    OBTAIN VENDOR INFORMATION OF
    OPTICAL DISK                ~S505
                │
    EXTRACT COEFFICIENTS "a" AND
    "b" CORRESPONDING TO VENDOR
    INFORMATION AND LINEAR      ~S507
    VELOCITY
                │
    LOOP COUNTER : n = 1        ~S509
                │
    SET "n-th" LIGHT-EMITTING
    POWER AS RECORDING POWER    ~S511
                │
    PERFORM TEST RECORDING      ~S513
                │
         n < Nopc ?             ~S515
    YES ───┘        │ NO
                    │
    OBTAIN β VALUE AND VALUE R
    RELATING TO REFLECTIVITY AT  ~S519
    EACH RECORDING POWER
                │
    CALCULATE VALUE K RELATING
    TO RECORDING QUALITY AT      ~S521
    EACH RECORDING POWER
                │
    OBTAIN RECORDING POWER "Pop"
    CORRESPONDING TO OPTIMUM     ~S523
    VALUE "Kop"
                │
    STORE RECORDING POWER "Pop"
    IN RAM AS OPTIMUM RECORDING  ~S525
    POWER
                │
               (A)

    S517
    n ← n + 1
```

EP 1 522 998 A2

**Description**

BACKGROUND OF THE INVENTION

FIELD OF THE INVENTION

The present invention relates to a recording power determining method, a program, a computer readable storage medium, a recording power determining device, and an optical disk apparatus. Particularly, the present invention relates to a recording power determining method for determining a recording power of a laser light beam emitted when recording information on an optical disk, a program implemented in a recording power determining device, a computer readable storage medium storing such a program, a recording power determining device that determines a recording power of a laser light beam emitted when recording information on a recording surface of an optical disk, and an optical disk apparatus including the recording power determining device.

DISCUSSION OF THE RELATED ART

Due to progress in digital technology and improvement in data compression technology in recent years, optical disks such as CDs (Compact Disc), and DVDs (Digital Versatile Disc) have gained attention for use as recording media that record audio-visual information, such as music, and images. Further, as the costs for such optical disks become lower, an optical disk apparatus has become widely used as an information recording apparatus that records information on an optical disk. The optical disk apparatus records and erases information by irradiating a fine spot of a laser light beam to spiral or concentric tracks formed on a recording surface of an optical disk, and reproduces information according to the laser light beam reflected from the recording surface.

Information is recorded on an optical disk according to the lengths and combination of marked areas (pits) and unmarked areas (space), which have different reflectivities. When recording information on an optical disk, the light-emitting power of a laser light beam emitted from a light source is controlled so that marked areas and space areas may be formed at a predetermined position and thus with a predetermined length.

When forming marked areas on a recordable type optical disk which contains organic dye in a recording surface thereof, such as a CD-R (CD-recordable) disk, a DVD-R (DVD-recordable) disk, and a DVD+R (DVD+recordable) disk, and on which information data can be recorded only one time, a laser light beam with an increased light-emitting power is emitted to the recordable type optical disk to heat and melt the dye, thereby transmuting and transforming a substrate portion contacting the area to which the laser light beam is emitted. When forming space areas, the light-emitting power of a laser light beam is reduced to a degree substantially equal to that during a reproducing operation to prevent the substrate from transmuting and transforming. Therefore, the reflectivity of the marked areas is lower than that of the space areas. The method for controlling a light-emitting power of a laser light beam as described above is called as a "single pulse recording method". The light-emitting power of a laser light beam emitted from a light source when forming marked areas is called as a "recording power".

When forming marked areas on a rewritable type optical disk which contains a special alloy in a recording surface thereof, such as a CD-RW (CD-rewritable) disk, a DVD-RW (DVD-rewritable) disk, and a DVD+RW (DVD+rewritable) disk, a mark area is formed by heating the alloy to a first temperature and then rapidly cooling the heated alloy so that the alloy becomes in an amorphous (non-crystalline) state. When forming space areas, a space area is formed by heating the alloy to a second temperature which falls below the first temperature and then gradually cooling the heated alloy so that the alloy becomes in a crystalline state. Thus, the reflectivity of the marked areas is lower than that of the space areas. The control of the temperature of the special alloy is performed by controlling the light-emitting power of a laser light beam emitted from a light source. To remove the influence of the thermal storage, the light-emitting power of a laser light beam emitted when forming marked areas is formed from multiple pulses. This technology is described, for example, in Published Japanese Patent application Nos. 10-106008, 11-232651, and 2001-229564. The method for controlling a light-emitting power of a laser light beam as described above is called as a "multiple-pulse recording method". The maximum light-emitting power of a laser light beam emitted from a light source when forming marked areas is called as a "heating power" or a "recording power". The minimum light-emitting power of a laser light beam emitted from a light source when forming marked areas is called as a "cooling power". Further, the light-emitting power of a laser light beam emitted from a light source when forming space areas is called as an "erase power". The erase power is less than the heating power and greater than the cooling power.

Because the above-described light-emitting power of a laser light beam significantly influences recording quality, various types of apparatuses and methods for controlling a light-emitting power of a laser light beam with accuracy are proposed in, for example, Published Japanese Patent application Nos. 6-338073 and 7-153106 and Patent No. 2744043.

As an optical disk becomes widely used, the demand for higher recording speed increases. If the recording speed becomes higher,-it is necessary to form marked areas and space areas in a shorter period of time than before. Consequently, the light-emitting power of a laser light beam needs to be controlled with more accuracy. If the recording speed becomes higher, the recording power, which is obtained in a recording power calibration operation called OPC (Optimum Power Control) performed before recording information data on an optical disk, does not necessarily match with an optimum recording power. As a result, recording quality may be deteriorated.

Therefore, it is desirable to provide a recording power determining method, a program, a computer readable storage medium, and a recording power determining device that can determine a recording power of a laser light beam emitted when recording information on an optical disk with accuracy.

Further, it is desirable to provide an optical disk apparatus that can record information data at a high speed with high recording quality.

SUMMARY OF THE INVENTION

According to an aspect of the present invention, a recording power determining method for determining a recording power of a laser light beam emitted when recording information on a recording surface of an optical disk, includes the steps of emitting a laser light beam to a recording area on the recording surface of the optical disk in which data is recorded, obtaining a value relating to reflectivity of the recording area based on the laser light beam reflected from the recording area,

obtaining a beta value based on the laser light beam reflected from the recording area, and determining the recording power of the laser light beam based on the value relating to reflectivity, and the beta value.

The step of obtaining the value relating to reflectivity may include obtaining the value (R) relating to reflectivity by a following equation,

$$R = Iave / Pw$$

where Iave is an average level of a High Frequency signal obtained based on the laser light beam reflected from the recording area, and Pw is a recording power of the laser light beam emitted when recording the data on the recording area, and the step of obtaining the beta value may include obtaining the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

The step of obtaining the value relating to reflectivity may include obtaining the value (R) relating to reflectivity by a following equation,

$$R = Iave / Iw$$

where Iave is an average level of a High Frequency signal obtained based on the laser light beam reflected from the recording area, and Iw is an amplitude of the High Frequency signal, and

the step of obtaining the beta value may include obtaining the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

The determining step may include determining the recording power based on a value obtained by a following calculation,

$$(a \times B) + (b \times R)$$

where a is a coefficient, B is the beta value, b is a coefficient, and R is the value relating to reflectivity.

According to another aspect of the present invention, a program is implemented in a recording power determining device that determines a recording power of a laser light beam emitted when recording information on a recording surface of an optical disk. The program is executed by a control unit of the recording power determining device to carry out the above-described method.

According to another aspect of the present invention, a computer readable storage medium stores a program implemented in a recording power determining device that determines a recording power of a laser light beam emitted when recording information on a recording surface of an optical disk. The program is executed by a control unit of the recording power determining device to carry out the above-described method.

According to yet another aspect of the present invention, a recording power determining device that determines a recording power of a laser light beam emitted when recording information on a recording surface of an optical disk includes a reflectivity obtaining mechanism configured to obtain a value relating to reflectivity of a recording area on the recording surface of the optical disk in which data is recorded based on a laser light beam reflected from the recording area, a beta value obtaining mechanism configured to obtain a beta value based on the laser light beam reflected from the recording area, and

a recording power determining mechanism configured to determine the recording power of the laser light beam based on the value relating to reflectivity, and the beta value.

The reflectivity obtaining mechanism may be configured to obtain the value (R) relating to reflectivity by a following equation,

$$R = Iave / Pw$$

where Iave is an average level of a High Frequency signal obtained based on the laser light beam reflected from the recording area, and Pw is a recording power of the laser light beam emitted when recording the data on the recording area, and the beta value obtaining mechanism may be configured to obtain the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

The reflectivity obtaining mechanism may be configured to obtain the value (R) relating to reflectivity by a following equation,

$$R = Iave / Iw$$

where Iave is an average level of a High Frequency signal obtained based on the laser light beam reflected from the recording area, and Iw is an amplitude of the High Frequency signal, and the beta value obtaining mechanism may be configured to obtain the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

The recording power determining mechanism may be configured to determine the recording power based on a value obtained by a following calculation,

$$(a \times B) + (b \times R)$$

where a is a coefficient, B is the beta value, b is a coefficient, and R is the value relating to reflectivity.

According to yet another aspect of the present invention, an optical disk apparatus that performs at least an information recording operation among the information recording operation, an information reproducing operation, and an information erasing operation by emitting a laser light beam to an optical disk, includes the above-described recording power determining device and an information recording device configured to record information on the recording surface of the optical disk by emitting a laser light beam having the recording power determined by the recording power determining device.

BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:

FIG. 1 is a block diagram of a configuration of an optical disk apparatus according to an embodiment of the present invention;
FIG. 2 is a schematic diagram of an optical pickup device shown in FIG. 1;
FIG. 3 is a block diagram of a configuration of a reproduction signal processing circuit shown in FIG. 1;
FIG. 4 is block diagrams of configurations of an average level detection circuit and a hold circuit shown in FIG. 3;
FIG. 5 shows an example of a coefficient table according to the embodiment of the present invention;
FIGS. 6A and 6B are flowcharts of recording process control operation steps of a CPU according to an embodiment of the present invention;
FIG. 7 is a graph showing a relationship between a value K relating to recording quality and a recording power according to an embodiment of the present invention;
FIG. 8 is a flowchart of reproducing process control operation steps of the CPU according to the embodiment of the present invention;
FIG. 9 is a graph showing a relationship between a B value and a recording power according to the embodiment of the present invention; and
FIG. 10 is a graph showing a relationship between a value R relating to reflectivity and a recording power according to the embodiment of the present invention.

DESCRIPTION OF THE PREFERRED EMBODIMENTS

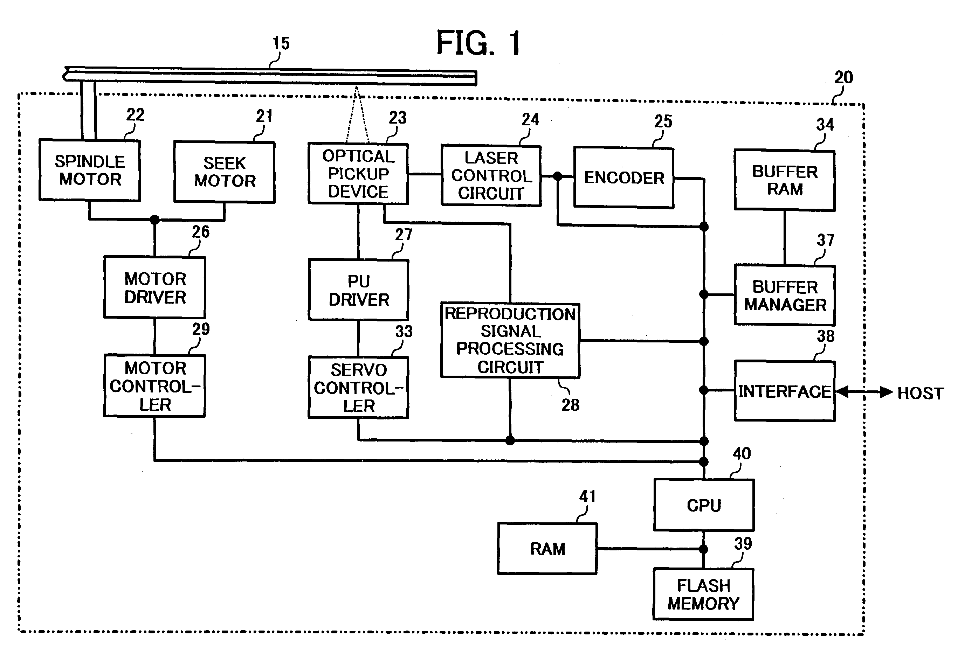

Preferred embodiments of the present invention are described in detail referring to FIGS. 1 through 10, wherein like reference numerals designate identical or corresponding parts throughout the several views.
FIG. 1 is a block diagram illustrating a configuration of an optical disk apparatus 20 according to an embodiment of the present invention.
The optical disk apparatus 20 shown in FIG. 1 includes a seek motor 21, a spindle motor 22, an optical pickup device 23, a laser control circuit 24, an encoder 25, a motor driver 26, a PU driver 27, a reproduction signal processing circuit 28, a motor controller 29, a servo controller 33, a buffer RAM 34, a buffer manager 37, an interface 38, a flash memory 39, a CPU 40, and a RAM 41. It is noted that the connection lines indicated in FIG. 1 are merely representative lines for illustrating the overall flow of signals and information and do not represent the entire connection relation between the blocks. According to the present embodiment, the optical disk apparatus 20 may be compatible with an information recording medium, such as an optical disk 15, conforming to a DVD+R standard.

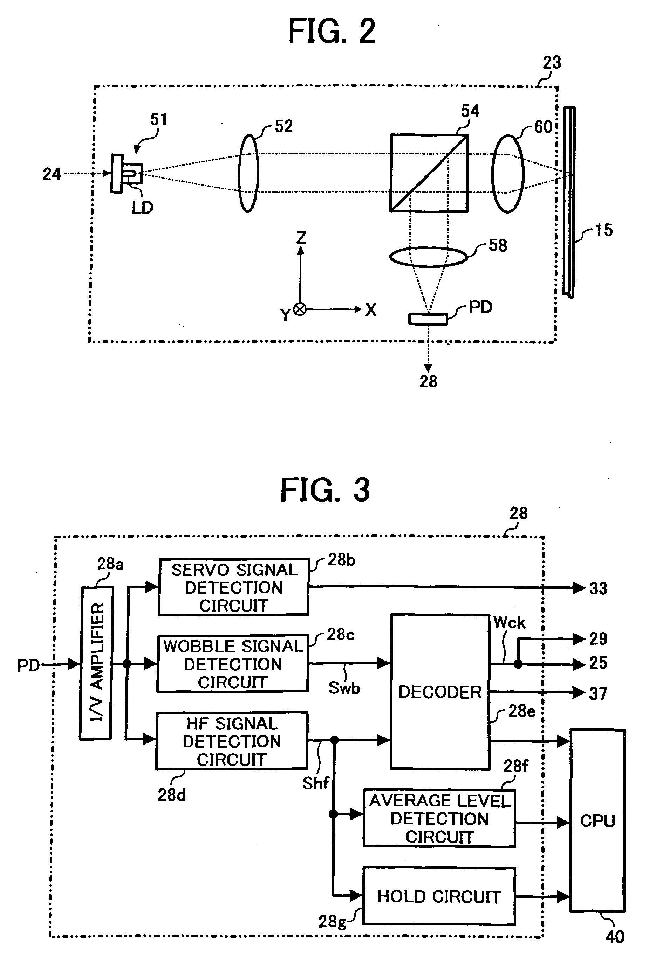

The seek motor 21 drives the optical pickup device 23 to move in a sledge direction (e.g., in "Z" direction in FIG. 2). The spindle motor 22 drives the optical disk 15 to rotate.

The optical pickup device 23 is configured to irradiate a laser light beam onto a recording surface of the optical disk 15 on which tracks are formed, and to receive reflected light from the recording surface. As illustrated in FIG. 2, the optical pickup device 23 includes a light source unit 51, a collimator lens 52, a beam splitter 54, an objective lens 60, a detection lens 58, a photo detector PD, and a drive system, such as a focusing actuator (not shown), and a tracking actuator (not shown).

The light source unit 51 includes a semiconductor laser LD functioning as a light source that emits a laser light beam with a wavelength of about 660 nm. In the present embodiment, a maximum intensity emission direction of a laser light beam emitted from the light source unit 51 is set to the +X direction in FIG. 2. The collimator lens 52 is placed at the +X direction side of the light source unit 51, and collimates the laser light beam emitted from the light source unit 51.

The beam splitter 54 is placed at the +X direction side of the collimator lens 52, and allows the laser light beam collimated by the collimator lens 52 to pass through the beam splitter 54. Further, the beam splitter 54 diverts the laser light beam, which has been reflected from the recording surface of the optical disk 15 and has been incident via the objective lens 60, in the -Z direction. The objective lens 60 is placed at the +X direction side of the beam splitter 54 and condenses the laser light beam passing through the beam splitter 54 so that a laser spot is formed on the recording surface of the optical disk 15.

The detection lens 58 is placed at the -Z direction side of the beam splitter 54 and condenses the reflected light diverted by the beam splitter 54 onto a light receiving surface of the photo detector PD. The photo detector PD may be identical to a conventional optical pickup device that outputs a plurality of signals including, for example, wobble signal information, reproduction data information, focus error information, and track error information, to the reproduction signal processing circuit 28.

The focusing actuator (not shown) slightly drives the objective lens 60 in a focus direction (i.e., in "X" direction in FIG. 2) which is equal to an optical axis direction of the objective lens 60.

The tracking actuator (not shown) slightly drives the objective lens 60 in a tracking direction (i.e., in "Z" direction in FIG. 2) which is orthogonal to a tangential direction of the tracks.

FIG. 3 is a block diagram illustrating an exemplary configuration of the reproduction signal processing circuit 28. As illustrated in FIG. 3, the reproduction signal processing circuit 28 includes an I/V amplifier 28a, a servo signal detection circuit 28b, a wobble signal detection circuit 28c, an HF (High Frequency) signal detection circuit 28d, a decoder 28e, an average level detection circuit 28f, and a hold circuit 28g. In FIG. 3, arrows indicate the direction of signal and data flow.

The I/V amplifier 28a converts a current signal corresponding to an output signal of the photo detector PD into a voltage signal. The voltage signal is amplified with a predetermined gain. The servo signal detection circuit 28b detects a servo signal (e.g., focus error signal, and track error signal) from the output signal of the I/V amplifier 28a. The servo signal detected herein is output to a servo controller 33. The wobble signal detection circuit 28c detects a wobble signal indicated by a reference character "Swb" in FIG. 3 from the output signal of the I/V amplifier 28a. The detected wobble signal Swb is output to the decoder 28e.

The HF signal detection circuit 28d detects an HF signal indicated by a reference character "Shf" in FIG. 3 from the output signal of the I/V amplifier 28a. The detected HF signal Shf is output to the decoder 28e, the average level detection circuit 28f, and the hold circuit 28g. The HF signal Shf is obtained by summing all electrical signals transformed by the photo detector PD. These electrical signals are modulated by the effects of the marked areas and space areas representing the information on the recording surface of the optical disk 15.

The decoder 28e extracts data, such as address information, and a synchronization signal, from the wobble signal Swb detected by the wobble signal detection circuit 28c. The extracted address information is output to the CPU 40, and the synchronization signal is output to the encoder 25 and the motor controller 29 as a clock signal Wck. The decoder 28e performs processes, such as demodulation and error correction processes, on the HF signal Shf detected by the HF signal detection circuit 28d, and stores the resulting data as reproduction data in the buffer RAM 34 via the buffer manager 37. The HF signal Shf includes address information, and the decoder 28e outputs the address information extracted from the HF signal to the CPU 40.

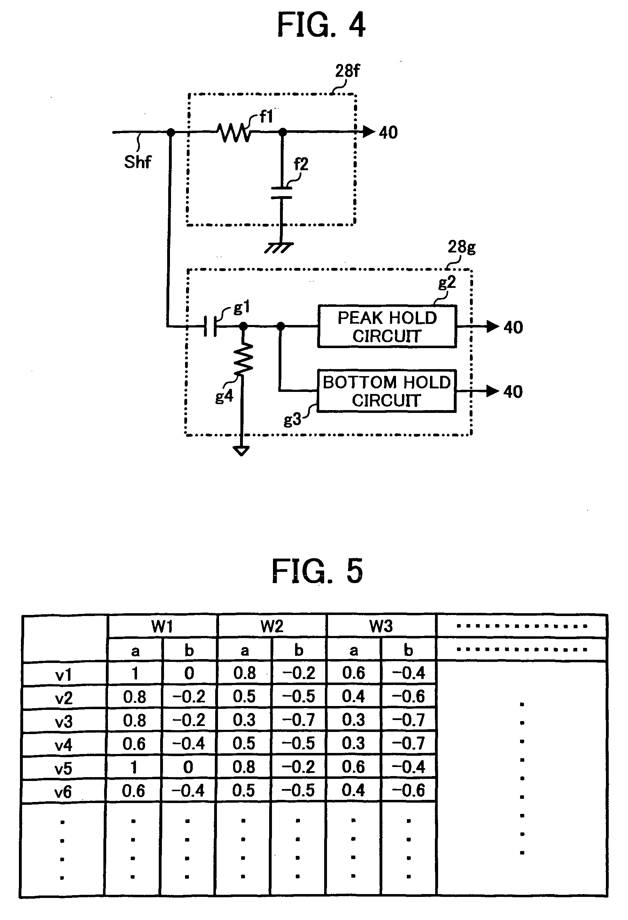

The average level detection circuit 28f detects an average level Iave of the HF signal Shf. As illustrated in FIG.4, a low-pass filter formed from a resistance f1 and a condenser f2 is used as the average level detection circuit 28f. The average level Iave detected by the average level detection circuit 28f is output to the CPU 40.

The hold circuit 28g detects a peak level and a bottom level of the HF signal Shf. As illustrated in FIG. 4, the hold circuit 28g includes a condenser g1 and a resistance g4 that subject the HF signal Shf to AC coupling, a peak hold circuit g2 that detects a peak level Ip of the HF signal Shf subjected to AC coupling, and a bottom hold circuit g3 that detects a bottom level Ib of the HF signal Shf subjected to AC coupling. The peak level Ip and the bottom level Ib detected by the peak hold circuit g2 and the bottom hold circuit g3, respectively, are output to the CPU 40. The CPU 40 calculates a beta value (B) (hereafter referred to as a "B value") by the following equation,

$$B = (Ip-Ib) / (Ip+Ib) \qquad (1)$$

where Ip is a peak level of the HF signal Shf subjected to AC coupling, and Ib is a bottom level of the HF signal Shf subjected to AC coupling.

Referring back to FIG. 1, the servo controller 33 generates a focus control signal for correcting a focus deviation based on the focus error signal from the servo signal detection circuit 28b, and generates a tracking control signal for correcting a track deviation based on the track error signal from the servo signal detection circuit 28b. When the servo is turned on, the control signals generated by the servo controller 33 are output to the PU driver 27. When the servo is turned off, the control signals are not output to the PU driver 27. The CPU 40 sets the turning on and off the servo.

The PU driver 27 outputs a drive signal for driving the focusing actuator corresponding to the focus control signal to the optical pickup device 23, and outputs a drive signal for driving the tracking actuator corresponding to the tracking control signal to the optical pickup device 23. In other words, tracking control and focus control are performed by the servo signal detection circuit 28b, the servo controller 33, and the PU driver 27.

The motor controller 29 generates a rotation control signal for controlling the rotation of the spindle motor 22 based on an instruction from the CPU 40. Further, the motor controller 29 generates a seek control signal for controlling the drive of the seek motor 21 based on an instruction from the CPU 40. The rotation control signal and the seek control signal generated by the motor controller 29 are output to the motor driver 26.

The motor driver 26 outputs a drive signal corresponding to the above-described rotation control signal to the spindle motor 22, and outputs a drive signal corresponding to the above-described seek control signal to the seek motor 21.

The buffer RAM 34 includes a buffer area and a variable area. The buffer area temporarily stores data to be recorded on the optical disk 15 and data reproduced from the optical disk 15. The variable area stores variables of various types of programs.

The buffer manager 37 manages input and output data to/from the buffer RAM 34, and notifies the CPU 40 when the amount of data stored in the buffer area of the buffer RAM 34 is a predetermined value.

The encoder 25 extracts data to be recorded which is stored in the buffer RAM 34 via the buffer manager 37 based on an instruction from the CPU 40, performs processes, such as data demodulation and attachment of an error correction code, and generates a write signal to be written on the optical disk 15. The write signal generated by the encoder 25 is output to the laser control circuit 24 together with the clock signal Wck.

As an exemplary configuration, the encoder 25, the reproduction signal processing circuit 28, the buffer manager 37, and the interface 38 are integrated in one large-scale integration (LSI).

The laser control circuit 24 controls the power of a laser light beam emitted onto the optical disk 15. When recording data on the optical disk 15, a drive signal for the semiconductor laser LD is generated based on recording conditions, the light-emitting characteristic of the semiconductor laser LD, and the write signal and clock signal Wck from the encoder 25.

The interface 38 corresponds to a bidirectional communication interface with a host, and may be a standard interface conforming to ATAPI (AT Attachment Packet Interface), for example.

The flash memory 39 includes a program area and a data area. The program area stores a program described in code readable by the CPU 40. The data area stores information, such as the light-emitting characteristic of the semiconductor laser LD, the information relating to seek movements of the optical pickup device 23 (hereafter may be referred to as "seek information"), recording conditions, a coefficient table, and an optimum value table. For example, as illustrated in FIG. 5, the coefficient table stores coefficients "a" and "b" each by vendor and by linear velocity at the time of recording to calculate a value (for example, a value K) relating to recording quality. The coefficients "a" and "b" are obtained in at least one of processes, such as a manufacturing process, a test process, and an adjustment process for the optical disk apparatus 20, based on experiments, simulations, and theoretical calculations, for example. The obtained coefficients "a" and "b" are stored in the coefficient table. Further, in the optimum value table, an optimum value (for example, an optimum value "Kop") of the value K relating to recording quality is each stored by vendor and by linear velocity at the time of recording. The optimum value "Kop" is obtained in at least one of processes, such as a manufacturing process, a test process, and an adjustment process for the optical disk apparatus 20, as a value relating to recording quality, for example, when jitter is minimum, based on experiments, simulations, and theoretical calculations, for example. The obtained optimum value "Kop" is stored in the optimum value table. The CPU 40 refers to the coefficient table and the optimum value table when determining a recording power of a laser light beam emitted from the semiconductor laser LD when recording information on the optical disk 15.

In this embodiment, for example, the value K relating to recording quality is calculated by the following equation,

$$K = (a \times B) + (b \times R) \qquad (2)$$

where a is a coefficient, B is a beta value calculated by the equation (1), b is a coefficient, and R is a value relating to reflectivity calculated by the following equation (3).

$$R = Iave / Pw \qquad (3)$$

where Iave is an average level of the HF signal Shf, and Pw is a recording power.

The above-described B (beta) value and the value R relating to reflectivity which are obtained according to recording power vary depending on the condition of an optical disk used by a user, such as a vendor of an optical disk, and a linear velocity at the time of recording. Accordingly, the value K relating to recording quality is calculated by weighting the B value and the value R relating to reflectivity according to vendor information and linear velocity at the time of recording, respectively.

In this embodiment, as shown in the coefficient table in FIG. 5, in an optical disk supplied by a vendor v1, when a linear velocity is w1, a coefficient "a" is 1, and a coefficient "b" is 0. When a linear velocity is w2, a coefficient "a" is 0.8, and a coefficient "b" is -0.2. When a linear velocity is w3, a coefficient "a" is 0.6, and a coefficient "b" is -0.4. Further, in an optical disk supplied by a vendor v2, when a linear velocity is w1, a coefficient "a" is 0.8, and a coefficient "b" is -0.2. When a linear velocity is w2, a coefficient "a" is 0.5, and a coefficient "b" is -0.5. When a linear velocity is w3, a coefficient "a" is 0.4, and a coefficient "b" is -0.6.

The CPU 40 controls operations in each of the blocks according to the program stored in the program area of the flash memory 39, and stores data necessary for controlling the blocks in the variable area of the buffer RAM 34 and in the RAM 41. An A/D (analog to digital) converter (not shown) and a D/A (digital to analog) converter (not shown) are attached to the CPU 40, and an analog signal is input to the CPU 40 via the A/D converter. The signal from the CPU 40 is output to the analog circuit via the D/A converter.

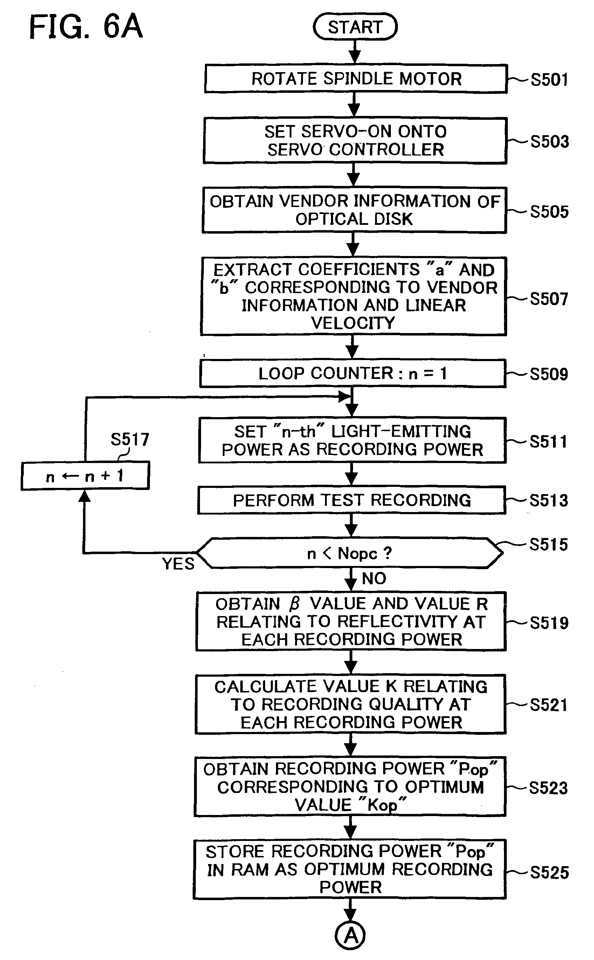

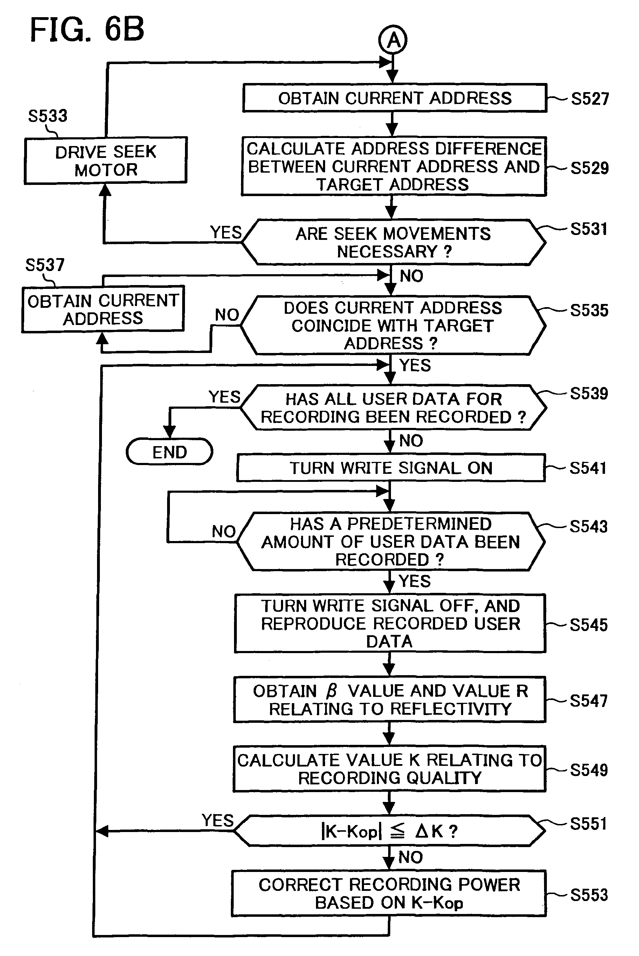

FIGS. 6A and 6B are flowcharts of recording process control operation steps of the CPU 40 according to an embodiment of the present invention. The recording process control operation steps shown in these flowcharts correspond to a sequence of process algorithms executed by the CPU 40. Upon receiving a recording request command from the host, the start address of a program corresponding to the flowcharts of FIGS. 6A and 6B is set to a program counter of the CPU 40, and the recording process control operation starts.

In step S501, the CPU 40 instructs the motor controller 29 to rotate the spindle motor 22 at a predetermined recording speed. In addition, the CPU 40 notifies the reproduction signal processing circuit 28 of the receipt of a recording request command from the host. Further, the CPU 40 instructs the buffer manager 37 to store data (i.e., data for recording) received from the host in the buffer RAM 34.

In step S503, the CPU 40 sets the servo-on onto the servo controller 33 when the CPU 40 confirms that the optical disk 15 rotates at a predetermined linear velocity, and thereby tracking and focusing controls are performed as described above. The tracking and focusing controls are performed at any desired time until the recording process control operation is completed.

Next, in step S505, the CPU 40 obtains a vendor information of the optical disk 15. When the optical disk 15 is loaded into the optical disk apparatus 20, the vendor information of the optical disk 15 is obtained from the Address In Pregroove (ADIP) information and stored in the RAM 41.

Subsequently, in step S507, the CPU 40 refers to the data area of the flash memory 39, and extracts the coefficients "a" and "b" corresponding to the vendor information and the linear velocity at the time of recording from the coefficient table. Then, in step S509, the CPU 40 sets an initial value 1 to a loop counter (i.e., n = 1).

Next, in step S511, the CPU 40 sets the preset "n"-th (the current "n" is 1) light-emitting power as a recording power. Subsequently, in step S513, the CPU 40 performs a test recording. Specifically, test data is recorded on a test recording area called a power calibration area (PCA) while changing the recording power set in step S511 step by step.

Next, in step S515, the CPU 40 refers to the loop counter "n", and determines if the number "n" falls below the predetermined number "Nopc". Here, the number "Nopc" is set to be equal to or greater than 2. Because the current "n" is 1 (i.e., the answer is YES in step S515), the recording process control operation proceeds to step S517.

In step S517, the CPU 40 increments the loop counter "n" by 1. That is, the current "n" is greater than the preceding "n" by 1. Then, the recording process control operation returns to reexecute step S511. The loop process of steps S511 through S517 is repeated until the number of the loop counter "n" equals or exceeds the number "Nopc".

When the number of the loop counter "n" equals or exceeds the number "Nopc" in step S515 (i.e., the answer is NO in step S515), the recording process control operation proceeds to step S519.

In step S519, the CPU 40 instructs to reproduce the test data recorded in the test recording area, and obtains the B value by the equation (1) by inputting the peak level Ip and the bottom level Ib which are obtained from the output signal of the hold circuit 28g. Further, the CPU 40 obtains the value R relating to reflectivity by the equation (3) by inputting the Iave value obtained from the output signal of the average level detection circuit 28f, and the recording power. The B value and the value R relating to reflectivity are obtained based on the reproduction signal of the test data which has been recorded using each recording power changed step by step in the test recording. That is, the B value and the value R relating to reflectivity are calculated at each recording power.

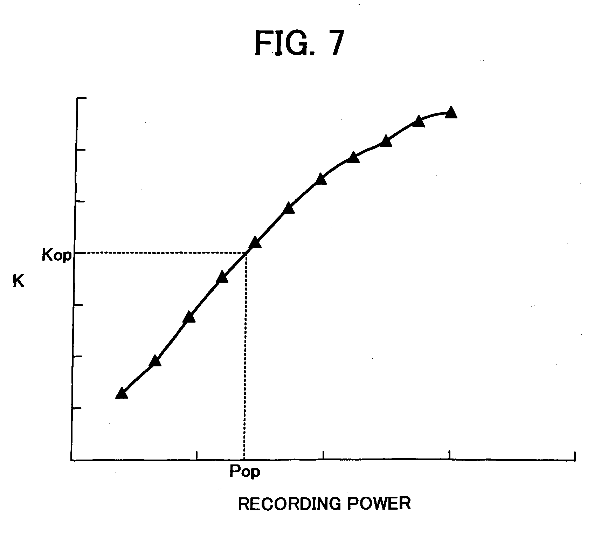

Next, in step S521, the value K relating to the recording quality is calculated at each recording power by the equation (2) by inputting the coefficients "a" and "b" which are extracted in step S507, and the B value and the value R relating to reflectivity which are obtained in step S519. As a result, a relationship between a recording power and the value K relating to the recording quality is obtained as shown in a graph of FIG. 7, for example.

Next, in step S523, the CPU 40 refers to the data area of the flash memory 39, and extracts the optimum value "Kop" which corresponds to the vendor information and the linear velocity at the time of recording from the optimum value table. Then, the CPU 40 obtains a recording power "Pop" corresponding to the optimum value "Kop" based on the relationship between the recording power and the value K relating to the recording quality shown in FIG. 7. Here, the recording power "Pop" is obtained by an approximate calculation or an interpolation calculation, for example.

Next, in step S525, the recording power "Pop" is stored in the RAM 41 as an optimum recording power. Accordingly, a so-called OPC (Optimum Power Control) operation is performed in steps S505 through S525. After the OPC operation is performed, the recording process control operation proceeds to step 527.

In step S527, the CPU 40 obtains a current address based on the address information from the decoder 28e. Next, in step S529, the CPU 40 calculates an address difference between the current address and the target address extracted by the recording request command.

Next, in step S531, the CPU 40 determines if seek movements are necessary based on the address difference. Specifically, the CPU 40 compares the address difference with a threshold value stored as one of the seek information in the flash memory 39. If the address difference exceeds the threshold value, the CPU 40 determines that seek movements are necessary (i. e., the answer is YES in step S531).

Next, in step S533, the CPU 40 instructs the motor controller 29 to drive the seek motor 21. Thereby, the seek motor 21 is driven, and seek movements are performed such that the address difference decreases. Subsequently, the recording process control operation returns to reexecute step S527. Until the address difference equals or falls below the threshold value, the loop process of steps S527 through S533 is repeated.

If the address difference equals or falls below the threshold value (i.e., the answer is NO in step S531), the recording process control operation proceeds to step S535. In step S535, the CPU 40 determines if the current address coincides with the target address. If the current address does not coincide with the target address (i.e., the answer is NO in step S535), the recording process control operation proceeds to step S537. In step S537, the CPU 40 obtains the current address based on the address information from the decoder 28e. Then, the recording process control operation returns to reexecute step S535. Until the current address coincides with the target address, the loop process of steps S535 and S537 is repeated. If the current address coincides with the target address (i.e., the answer is YES in step S535), the recording process control operation proceeds to step S539.

In step S539, the CPU 40 determines if all user data (not test data) for recording has been recorded on the optical disk 15. Because the recording operation for recording user data has not yet been started here (i.e., the answer is NO in step S539), the recording process control operation proceeds to step S541.

In step S541, the CPU 40 turns a write signal on for the encoder 25, and thereby user data is recorded on the optical disk 15 by way of the encoder 25, the laser control circuit 24, and the optical pickup device 23. Subsequently, in step S543, the CPU 40 determines if a predetermined amount of user data (e.g., one ECC block) has been recorded. If the predetermined amount of user data has not yet been recorded (i.e., the answer is NO in step S543), the recording process control operation returns to reexecute step S543. If the predetermined amount of user data has been recorded (i.e., the answer is YES in step 543), the recording process control operation proceeds to step S545.

In step S545, the CPU 40 turns the write signal off, and instructs to reproduce the data recorded immediately before. Next, in step S547, the CPU 40 obtains the B value and the value R relating to reflectivity similarly as in step S519. Further, in step S549, the CPU 40 calculates the value K relating to the recording quality similarly as in step S521.

In step S551, the CPU 40 determines if the absolute value of the difference between the value K relating to the recording quality calculated in step S549 (hereafter referred to as a "calculated value K") and the optimum value "Kop" is equal to or less than a predetermined allowance (for example, indicated by ∆K). If the absolute value of the difference between the calculated value K and the optimum value "Kop" exceeds the allowance ∆K (i.e., the answer is NO in step S551), the recording process control operation proceeds to step S553.

In step S553, the CPU 40 corrects the recording power based on the difference between the calculated value K and the optimum value "Kop". For example, if the calculated value K exceeds the optimum value "Kop", the power, which corresponds to the difference between the calculated value K and the optimum value "Kop", is reduced from the recording power. If the calculated value K falls below the optimum value "Kop", the power, which corresponds to the difference between the optimum value "Kop" and the calculated value K and, is added to the recording power. After step S553, the recording process control operation returns to reexecute step S539. Accordingly, a so-called running OPC operation is performed in steps S545 through S553.

If the absolute value of the difference between the calculated value K and the optimum value "Kop" is equal to or less than the allowance ΔK (i.e., the answer is YES in step S551), the recording process control operation returns to reexecute step S539. That is, the recording power is not corrected.

If the CPU 40 determines that all the user data for recording has been recorded on the optical disk 15 in step S539 (i.e., the answer is YES in step S539), the recording process control operation ends.

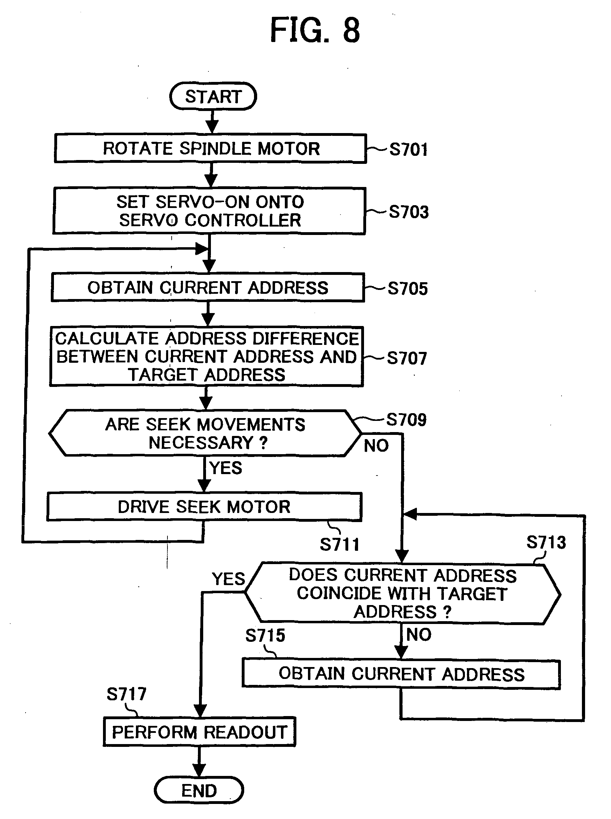

FIG. 8 is a flowchart of reproducing process control operation steps of the CPU 40 according to an embodiment of the present invention. The reproducing process control operation steps shown in these flowcharts correspond to a sequence of process algorithms executed by the CPU 40. Upon receiving a reproducing request command from the host, the start address of a program corresponding to the flowchart of FIG. 8 is set to the program counter of the CPU 40, and the reproducing process control operation starts.

In step S701, the CPU 40 instructs the motor controller 29 to rotate the spindle motor 22 at a predetermined reproducing speed. In addition, the CPU 40 notifies the reproduction signal processing circuit 28 of the receipt of a reproducing request command from the host.

In step S703, the CPU 40 sets the servo-on onto the servo controller 33 when the CPU 40 confirms that the optical disk 15 rotates at a predetermined linear velocity, and thereby tracking and focusing controls are performed as described above. The tracking and focusing controls are performed at any desired time until the reproducing process control operation is completed. The address information of the track is output from the decoder 28e to the CPU 40 at any desired time based on the HF signal.

In step S705, the CPU 40 obtains a current address based on the address information from the decoder 28e. Next, in step S707, the CPU 40 calculates an address difference between the current address and the target address extracted by the reproducing request command.

Next, in step S709, the CPU 40 determines if seek movements are necessary based on the address difference similarly as in step S531. If seek movements are necessary in step S709 (i.e., the answer is YES in step S709), the reproducing process control operation proceeds to step S711.

In step S711, the CPU 40 instructs the motor controller 29 to drive the seek motor 21. Thereby, the seek motor 21 is driven, and seek movements are performed such that the address difference decreases. Subsequently, the reproducing process control operation returns to reexecute step S705. Until the address difference equals or falls below the threshold value, the loop process of steps S705 through S711 is repeated.

If the address difference equals or falls below the threshold value (i.e., the answer is NO in step S709), the reproducing process control operation proceeds to step S713. In step S713, the CPU 40 determines if the current address coincides with the target address. If the current address does not coincide with the target address (i.e., the answer is NO in step S713), the reproducing process control operation proceeds to step S715. In step S715, the CPU 40 obtains the current address based on the address information from the decoder 28e. Then, the reproducing process control operation returns to reexecute step S713. Until the current address coincides with the target address, the loop process of steps S713 and S715 is repeated. If the current address coincides with the target address (i.e., the answer is YES in step S713), the reproducing process control operation proceeds to step S717.

In step S717, the CPU 40 instructs the reproduction signal processing circuit 28 to perform readout. Accordingly, the reproduction data is obtained by way of the reproduction signal processing circuit 28, and subsequently stored in the buffer RAM 34. The reproduction data is transferred in the units of sectors to the host via the buffer manager 37 and the interface 38. When all the data designated by the host is reproduced, the reproducing process control operation ends.

As described above, by employing the reproduction signal processing circuit 28 and the CPU 40 and by executing the program with the CPU 40 functioning as a control unit, the optical disk apparatus 20 of the present embodiment provides a recording power determining device. Specifically, a reflectivity obtaining mechanism is provided by employing the average level detection circuit 28f and the CPU 40 and by executing the program with the CPU 40. Further, a beta value obtaining mechanism is provided by employing the hold circuit 28g and the CPU 40 and by executing the program with the CPU 40. Further, a recording power determining mechanism is provided by employing the CPU 40 and by executing the-program with the CPU 40. Moreover, an information recording device is provided by employing the optical pickup device 23 and the CPU 40 and by executing the program with the CPU 40. Nevertheless, the present invention is not limited to this embodiment. For example, at least part of the above-described mechanisms provided by executing the steps of the program with the CPU 40 may be provided in the form of hardware.

A recording power determining method for determining a recording power of a laser light beam emitted when recording information on a recording surface of the optical disk 15 according to the embodiment of the present invention is executed in the OPC operation of steps S505 through S523 in FIG. 6A, and is executed in the running OPC operation of steps S545 through S553 in FIG. 6B.

According to the above-described embodiment of the present invention, upon receiving a recording request command from the host, test data is recorded on the PCA area while changing the recording power step by step. Subsequently, the test data recorded on the PCA area is successively reproduced. Then, the value K relating to the recording quality is obtained at each recording power based on the coefficients "a" and "b" extracted from the coefficient table, which correspond to the vendor information and the linear velocity of the optical disk 15, and based on the value R relating to reflectivity and the B (beta) value which are detected from the HF signal. Subsequently, the optimum value "Kop" corresponding to the vendor information and the linear velocity of the optical disk 15 is extracted from the optimum value table by referring to the data area of the flash memory 39. Then, the recording power "Pop" corresponding to the optimum value "Kop" is obtained based on the relationship between the recording power and the value K relating to the recording quality. The recording power "Pop" is used as an optimum recording power of a laser light beam emitted from the semiconductor laser LD when recording user data (i.e., actual data) on the optical disk 15.

According to the above-described embodiment of the present invention, the value R relating to the reflectivity of a recording area of the optical disk 15 in which data is recorded and the B (beta) value are obtained according to the recording power of the laser light beam emitted from the semiconductor laser LD when the data is recorded on the recording area. At this time, the value R relating to the reflectivity and the B value are respectively obtained based on laser light beams reflected from the recording area on the recording surface of the optical disk 15. In the value K relating to the recording quality, the influence of the recording power on the value R relating to the reflectivity and the influence of the recording power on the B value are superimposed. Accordingly, the value K relating to the recording quality has high sensitive characteristic relative to the recording power, and changes at a substantially uniform rate according to the change of the recording power. Accordingly, the recording power of the laser light beam emitted from the semiconductor laser LD when recording information on the optical disk 15 can be determined with accuracy.

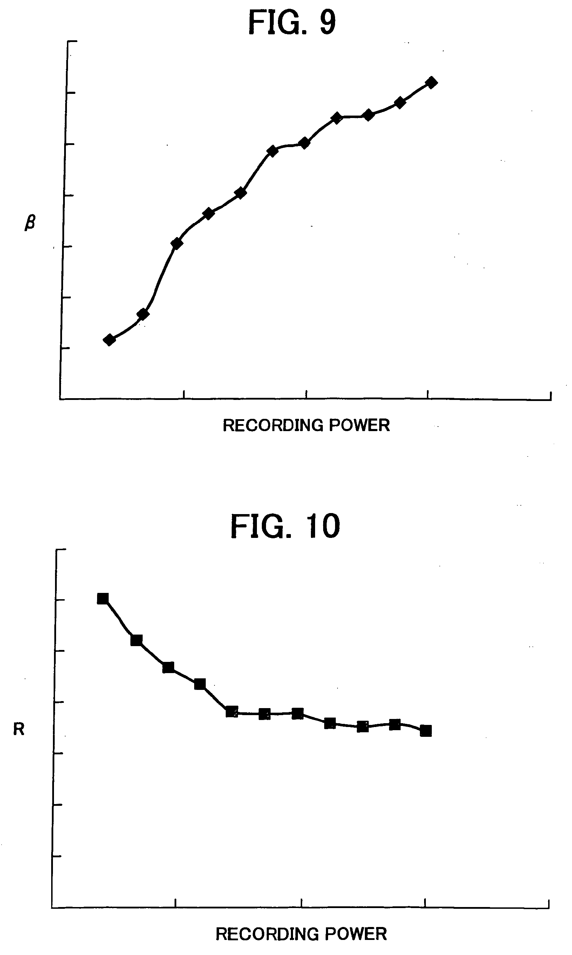

FIG. 9 is a graph showing a relationship between a B (beta) value and a recording power according to the embodiment of the present invention. FIG. 10 is a graph showing a relationship between a value R relating to reflectivity and a recording power according to the embodiment of the present invention. As compared to the relationship between a B (beta) value and a recording power shown in FIG. 9 and the relationship between a value R relating to reflectivity and a recording power shown in FIG. 10, the relationship between the value K relating to recording quality and a recording power shown in FIG. 7 can be expressed by a simple approximate expression. In this embodiment, the recording power of the laser light beam emitted from the semiconductor laser LD when recording information on the optical disk 15 can be determined with accuracy by using the relationship between the value K relating to recording quality and a recording power, as compared to a case using one of the relationship between a B (beta) value and a recording power and the relationship between a value R relating to reflectivity and a recording power.

Further, according to the embodiment of the present invention, every time when a predetermined amount (e.g., one ECC block) of user data is recorded on the optical disk 15, the user data that has been recorded immediately before is reproduced, and the value K relating to the recording quality is obtained based on the coefficients "a" and "b" extracted from the coefficient table, which correspond to the vendor information and the linear velocity of the optical disk 15 and based on the value R relating to reflectivity and the B (beta) value which are detected from the HF signal. Subsequently, the recording power is corrected based on the difference between the obtained value K and the optimum value "Kop" that corresponds to the vendor information and the linear velocity of the optical disk 15 and is extracted from the optimum value table. By doing so, even if the light-emitting characteristic of the semiconductor laser LD changes due to temperature change during a period of recording user data on the optical disk 15, an optimum recording power can be constantly determined with accuracy.

Further, according to the embodiment of the present invention, the recording power of the laser light beam emitted from the semiconductor laser LD when recording information on the optical disk 15 can be determined with accuracy even if the linear velocity of the optical disk 15 increases. As a result, a recording operation can be performed at a high speed with high recording quality.

Moreover, according to the embodiment of the present invention, the recording power of the laser light beam emitted from the semiconductor laser LD when recording information on the optical disk 15 can be determined with accuracy in both the OPC and running OPC operations.

In the above-described embodiment of the present invention, the value R relating to reflectivity includes not only reflectivity, but also a value which can be converted to reflectivity and a value which changes according to the change of reflectivity. Further, the value K relating to recording quality includes a value which changes according to the change of recording quality, and a value which can be used for evaluation of recording quality.

The present invention has been described with respect to the exemplary embodiment illustrated in the figures. However, the present invention is not limited to this embodiment and may be practiced otherwise.

In the above-described embodiment, the value R relating to reflectivity is calculated by the equation (3). Alternatively, the value R relating to reflectivity may be calculated by the following equation (4).

$$R = Iave / Iw \qquad (4)$$

where Iave is an average level of the HF signal Shf, and Iw is an amplitude of the HF signal Shf.

The amplitude Iw may be obtained from the difference between the peak level Ip of the HF signal Shf subjected to AC coupling and the bottom level Ib of the HF signal Shf subjected to AC coupling.

In the above-described embodiment, the running OPC operation is performed by interrupting the recording operation. Alternatively, the running OPC operation may be performed without interrupting the recording operation. In this case, the value relating to reflectivity obtained during a recording operation is significantly different from the value relating to reflectivity obtained by interrupting a recording operation. Therefore, in addition to the above-described optimum value table, another optimum value table used when performing the running OPC operation without interrupting a recording operation is required.

Further, in the above-described embodiment, the coefficients "a" and "b" are each set by the vendor information and by the linear velocity of the optical disk 15. However, the coefficients "a" and "b" are not limited to these. For example, if the coefficient "a" or "b" does not significantly change according to the vendor information and the linear velocity of the optical disk 15, the coefficient "a" or "b" may be a fixed value irrespective of the vendor information and the linear velocity of the optical disk 15. If the coefficient "a" or "b" does not significantly change according to the vendor information, but significantly changes according to the linear velocity, the coefficient "a" or "b" may be set by the linear velocity. On the other hand, if the coefficient "a" or "b" significantly changes according to the vendor information, but does not change significantly according to the linear velocity, the coefficient "a" or "b" may be set by the vendor information.

Moreover, in the above-described embodiment, the optimum value "Kop" is each set by the vendor information and by the linear velocity of the optical disk 15. However, the optimum value "Kop" is not limited to this. For example, if the optimum value "Kop" does not significantly change according to the vendor information and the linear velocity of the optical disk 15, the optimum value "Kop" may be a fixed value irrespective of the vendor information and the linear velocity of the optical disk 15. If the optimum value "Kop" does not significantly change according to the vendor information, but significantly changes according to the linear velocity, the optimum value "Kop" may be set by the linear velocity. On the other hand, if the optimum value "Kop" significantly changes according to the vendor information, but does not change significantly according to the linear velocity, the optimum value "Kop" may be set by the vendor information.

Moreover, in the above-described embodiment, the CPU 40 calculates the B (beta) value based on the output signal of the hold circuit 28g. Alternatively, the calculation circuit that calculates the B (beta) value by the above-described equation (1) may be attached to the hold circuit 28g.

Further, in the above-described embodiment, the equation (2) for calculating the value K relating to recording quality includes a term of first order of the value R relating to reflectivity and a term of first order of the B (beta) value. Alternatively, at least one of the term of the value R relating to reflectivity and the term of the B (beta) value may be second or higher order.

Further, in the above-described embodiment, the value K relating to recording quality is calculated by adding a term including the value R relating to reflectivity to a term including the B (beta) value. However, the calculation is not limited to this.

Although the present embodiment has been described on the assumption that the optical disk apparatus 20 is adapted to optical disks in conformity with a DVD+R standard, the optical disk apparatus 20 may be adapted to optical disks in conformity with a DVD+RW standard.

In the above-described embodiment, the optical disk apparatus 20 is configured to record and reproduce information data on and from the optical disk 15. However, the optical disk apparatus 20 may be able to perform at least an information recording operation among the information recording operation, an information reproducing operation, and an information erasing operation.

Although the optical pickup device 23 of the present embodiment includes a single semiconductor laser, plural semiconductor lasers that emit laser light beams with different wavelengths may also be employed. For example, the plural semiconductor lasers may include at least one of a semiconductor laser that emits a laser light beam with a wavelength of about 405 nm, a semiconductor laser that emits a laser light beam with a wavelength of about 660 nm, and a semiconductor laser that emits a laser light beam with a wavelength of about 780 nm. That is, the optical disk apparatus 20 may be adapted to plural kinds of optical disks each conforming to the standards different with one another.

Moreover, in the present embodiment, the interface 39 is in conformity with ATAPI standards. Alternatively, the interface 39 may be in conformity with ATA (AT Attachment), SCSI (Small Computer System Interface), USB (Universal Serial Bus) 1.0, USB 2.0, IEEE 1394, IEEE 802.3, Serial ATA, or Serial ATAPI.

Numerous additional modifications and variations of the present invention are possible in light of the above teachings. It is therefore understood that within the scope of the appended claims, the present invention may be practiced other than as specifically described herein.

## Claims

1. A recording power determining method for determining a recording power of a laser light beam emitted when recording information on a recording surface of an optical disk, comprising the steps of:

    emitting a laser light beam to a recording area on the recording surface of the optical disk in which data is recorded;
    obtaining a value relating to reflectivity of the recording area based on the laser light beam reflected from the recording area;
    obtaining a beta value based on the laser light beam reflected from the recording area; and
    determining the recording power of the laser light beam based on the value relating to reflectivity, and the beta value.

2. A method according to claim 1,
    wherein the step of obtaining the value relating to reflectivity comprises obtaining the value (R) relating to reflectivity by a following equation,

$$R = Iave / Pw$$

    where Iave is an average level of a High Frequency signal obtained based on the laser light beam reflected from the recording area, and Pw is a recording power of the laser light beam emitted when recording the data on the recording area, and
    wherein the step of obtaining the beta value comprises obtaining the beta value (B) by a following equation,

$$B = (Ip-Ib) / (Ip+Ib)$$

    where Ip is a peak level of a High Frequency signal obtained based on the laser light beam reflected from the recording area, and Ib is a bottom level of the High Frequency signal.

3. A method according to claim 1,
    wherein the step of obtaining the value relating to reflectivity comprises obtaining the value (R) relating to reflectivity by a following equation,

$$R = Iave / Iw$$

    where Iave is an average level of a High Frequency signal obtained based on the laser light beam reflected from the recording area, and Iw is an amplitude of the High Frequency signal, and
    wherein the step of obtaining the beta value comprises obtaining the beta value (B) by a following equation,

$$B = (Ip-Ib) / (Ip+Ib)$$

    where Ip is a peak level of a High Frequency signal obtained based on the laser light beam reflected from the recording area, and Ib is a bottom level of the High Frequency signal.

4. A method according to one of claims 2 and 3, wherein the determining step comprises determining the recording power based on a value obtained by a following calculation,

$$(a \times B) + (b \times R)$$

    where a is a coefficient, B is the beta value, b is a coefficient, and R is the value relating to reflectivity.

5. A method according to claim 4, wherein at least one of the coefficient a and the coefficient b corresponds to a vendor of the optical disk.

6. A method according to claim 4, wherein at least one of the coefficient a and the coefficient b corresponds to a linear velocity of the optical disk when recording the information on the recording surface of the optical disk.

7. A method according to one of claims 1 to 6, wherein the optical disk is in conformity with one of a DVD+R standard and a DVD+RW standard.

8. A method according to one of claims 1 to 7, wherein the recording area is a test recording area in which test data is recorded.

9. A method according to one of claims 1 to 7, wherein the recording area is an area in which user data is recorded immediately before emitting the laser light beam to the recording area.

10. A program implemented in a recording power determining device that determines a recording power of a laser light beam emitted when recording information on a recording surface of an optical disk, the program being executed by a control unit of the recording power determining device to carry out a method comprising the steps of:

emitting a laser light beam to a recording area on the recording surface of the optical disk in which data is recorded;
obtaining a value relating to reflectivity of the recording area based on the laser light beam reflected from the recording area;
obtaining a beta value based on the laser light beam reflected from the recording area; and
determining the recording power of the laser light beam based on the value relating to reflectivity, and the beta value.

11. A program according to claim 10, wherein the step of obtaining the value relating to reflectivity comprises obtaining the value (R) relating to reflectivity by a following equation,

$$R = Iave / Pw$$

where Iave is an average level of a High Frequency signal obtained based on the laser light beam reflected from the recording area, and Pw is a recording power of the laser light beam emitted when recording the data on the recording area, and
wherein the step of obtaining the beta value comprises obtaining the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

12. A program according to claim 10, wherein the step of obtaining the value relating to reflectivity comprises obtaining the value (R) relating to reflectivity by a following equation,

$$R = Iave / Iw$$

where Iave is an average level of a High Frequency signal obtained based on the laser light beam reflected from the recording area, and Iw is an amplitude of the High Frequency signal, and
wherein the step of obtaining the beta value comprises obtaining the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

13. A program according to one of claims 11 and 12, wherein the determining step comprises determining the recording power based on a value obtained by a following calculation,

$$(a \times B) + (b \times R)$$

where a is a coefficient, B is the beta value, b is a coefficient, and R is the value relating to reflectivity.

14. A program according to claim 13, wherein at least one of the coefficient a and the coefficient b corresponds to a vendor of the optical disk.

15. A program according to claim 13, wherein at least one of the coefficient a and the coefficient b corresponds to a linear velocity of the optical disk when recording the information on the recording surface of the optical disk.

16. A program according to one of claims 10 to 15, wherein the optical disk is in conformity with one of a DVD+R standard and a DVD+RW standard.

17. A program according to one of claims 10 to 16, wherein the recording area is a test recording area in which test data is recorded.

18. A program according to one of claims 10 to 16, wherein the recording area is an area in which user data is recorded immediately before emitting the laser light beam to the recording area.

19. A computer readable storage medium storing a program implemented in a recording power determining device that determines a recording power of a laser light beam emitted when recording information on a recording surface of an optical disk, the program being executed by a control unit of the recording power determining device to carry out a method comprising the steps of:

emitting a laser light beam to a recording area on the recording surface of the optical disk in which data is recorded;

obtaining a value relating to reflectivity of the recording area based on the laser light beam reflected from the recording area;

obtaining a beta value based on the laser light beam reflected from the recording area; and

determining the recording power of the laser light beam based on the value relating to reflectivity, and the beta value.

20. A medium according to claim 19, wherein the step of obtaining the value relating to reflectivity comprises obtaining the value (R) relating to reflectivity by a following equation,

$$R = Iave / Pw$$

where Iave is an average level of a High Frequency signal obtained based on the laser light beam reflected from the recording area, and Pw is a recording power of the laser light beam emitted when recording the data on the recording area, and

wherein the step of obtaining the beta value comprises obtaining the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

21. A medium according to claim 19, wherein the step of obtaining the value relating to reflectivity comprises obtaining the value (R) relating to reflectivity by a following equation,

$$R = Iave / Iw$$

where Iave is an average level of a High Frequency signal obtained based on the laser light beam reflected from the recording area, and Iw is an amplitude of the High Frequency signal, and

wherein the step of obtaining the beta value comprises obtaining the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

22. A medium according to one of claims 20 and 21, wherein the determining step comprises determining the recording power based on a value obtained by a following calculation,

$$(a \times B) + (b \times R)$$

where a is a coefficient, B is the beta value, b is a coefficient, and R is the value relating to reflectivity.

23. A medium according to claim 22, wherein at least one of the coefficient a and the coefficient b corresponds to a vendor of the optical disk.

24. A medium according to claim 22, wherein at least one of the coefficient a and the coefficient b corresponds to a linear velocity of the optical disk when recording the information on the recording surface of the optical disk.

25. A medium according to one of claims 19 to 24, wherein the optical disk is in conformity with one of a DVD+R standard and a DVD+RW standard.

26. A medium according to one of claims 19 to 25, wherein the recording area is a test recording area in which test data is recorded.

27. A medium according to one of claims 19 to 25, wherein the recording area is an area in which user data is recorded immediately before emitting the laser light beam to the recording area.

28. A recording power determining device that determines a recording power of a laser light beam emitted when recording information on a recording surface of an optical disk, the recording power determining device comprising:

a reflectivity obtaining mechanism configured to obtain a value relating to reflectivity of a recording area on the recording surface of the optical disk in which data is recorded based on a laser light beam reflected from the recording area;

a beta value obtaining mechanism configured to obtain a beta value based on the laser light beam reflected from the recording area; and

a recording power determining mechanism configured to determine the recording power of the laser light beam based on the value relating to reflectivity, and the beta value.

**29.** A recording power determining device according to claim 28,

wherein the reflectivity obtaining mechanism is configured to obtain the value (R) relating to reflectivity by a following equation,

$$R = Iave / Pw$$

where Iave is an average level of a High Frequency signal obtained based on the laser light beam reflected from the recording area, and Pw is a recording power of the laser light beam emitted when recording the data on the recording area, and

wherein the beta value obtaining mechanism is configured to obtain the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

**30.** A recording power determining device according to claim 28, wherein the reflectivity obtaining mechanism is configured to obtain the value (R) relating to reflectivity by a following equation,

$$R = Iave / Iw$$

where Iave is an average level of a High Frequency signal obtained based on the laser light beam reflected from the recording area, and Iw is an amplitude of the High Frequency signal, and

wherein the beta value obtaining mechanism is configured to obtain the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

**31.** A recording power determining device according to one of claims 29 and 30, wherein the recording power determining mechanism is configured to determine the recording power based on a value obtained by a following calculation,

$$(a \times B) + (b \times R)$$

where a is a coefficient, B is the beta value, b is a coefficient, and R is the value relating to reflectivity.

**32.** A recording power determining device according to claim 31, wherein at least one of the coefficient a and the coefficient b corresponds to a vendor of the optical disk.

**33.** A recording power determining device according to claim 31, wherein at least one of the coefficient a and the coefficient b corresponds to a linear velocity of the optical disk when recording the information on the recording surface of the optical disk.

**34.** A recording power determining device according to one of claims 28 to 33, wherein the optical disk is in conformity with one of a DVD+R standard and a DVD+RW standard.

**35.** A recording power determining device according to one of claims 28 to 34, wherein the recording area is a test recording area in which test data is recorded.

**36.** A recording power determining device according to one of claims 28 to 34, wherein the recording area is an area in which user data is recorded immediately before the laser light beam emitted to the recording area is reflected from the recording area.

**37.** An optical disk apparatus that performs at least an information recording operation among the information recording operation, an information reproducing operation, and an information erasing operation by emitting a laser light beam to an optical disk, the optical disk apparatus comprising:

a recording power determining device configured to determine a recording power of a laser light beam emitted when recording information on a recording surface of the optical disk, the recording power determining device comprising,

a reflectivity obtaining mechanism configured to obtain a value relating to reflectivity of a recording area on the recording surface of the optical disk in which data is recorded based on a laser light beam reflected from the recording area;

a beta value obtaining mechanism configured to obtain a beta value based on the laser light beam reflected from the recording area; and

a recording power determining mechanism configured to determine the recording power of the laser light beam based on the value relating to reflectivity, and the beta value, and

an information recording device configured to record information on the recording surface of the optical disk by emitting a laser light beam having the recording power determined by the recording power determining device.

38. An optical disk apparatus according to claim 37, wherein the reflectivity obtaining mechanism is configured to obtain the value (R) relating to reflectivity by a following equation,

$$R = Iave / Pw$$

where Iave is an average level of a High Frequency signal obtained based on the laser light beam reflected from the recording area, and Pw is a recording power of the laser light beam emitted when recording the data on the recording area, and wherein the beta value obtaining mechanism is configured to obtain the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

39. An optical disk apparatus according to claim 37, wherein the reflectivity obtaining mechanism is configured to obtain the value (R) relating to reflectivity by a following equation,

$$R = Iave / Iw$$

where Iave is an average level of a High Frequency signal obtained based on the laser light beam reflected from the recording area, and Iw is an amplitude of the High Frequency signal, and wherein the beta value obtaining mechanism is configured to obtain the beta value (B) by a following equation,

$$B = (Ip-Ib) / (Ip+Ib)$$

where Ip is a peak level of a High Frequency signal obtained based on the laser light beam reflected from the recording area, and Ib is a bottom level of the High Frequency signal.

40. An optical disk apparatus according to one of claims 38 and 39, wherein the recording power determining mechanism is configured to determine the recording power based on a value obtained by a following calculation,

$$(a \times B) + (b \times R)$$

where a is a coefficient, B is the beta value, b is a coefficient, and R is the value relating to reflectivity.

41. An optical disk apparatus according to claim 40, wherein at least one of the coefficient a and the coefficient b corresponds to a vendor of the optical disk.

42. An optical disk apparatus according to claim 40, wherein at least one of the coefficient a and the coefficient b corresponds to a linear velocity of the optical disk when recording the information on the recording surface of the optical disk.

43. An optical disk apparatus according to one of claims 37 to 42, wherein the optical disk is in conformity with one of a DVD+R standard and a DVD+RW standard.

44. An optical disk apparatus according to one of claims 37 to 43, wherein the recording area is a test recording area in which test data is recorded.

45. An optical disk apparatus according to one of claims 37 to 43, wherein the recording area is an area in which user data is recorded immediately before the laser light beam emitted to the recording area is reflected from the recording area.

# FIG. 1

EP 1 522 998 A2

# FIG. 2

# FIG. 3

# FIG. 4

# FIG. 5

|  | W1 | | W2 | | W3 | | · · · · · · · · · · · · · |
|  | a | b | a | b | a | b | · · · · · · · · · · · · · |
|---|---|---|---|---|---|---|---|
| v1 | 1 | 0 | 0.8 | −0.2 | 0.6 | −0.4 | |
| v2 | 0.8 | −0.2 | 0.5 | −0.5 | 0.4 | −0.6 | |
| v3 | 0.8 | −0.2 | 0.3 | −0.7 | 0.3 | −0.7 | |
| v4 | 0.6 | −0.4 | 0.5 | −0.5 | 0.3 | −0.7 | |
| v5 | 1 | 0 | 0.8 | −0.2 | 0.6 | −0.4 | |
| v6 | 0.6 | −0.4 | 0.5 | −0.5 | 0.4 | −0.6 | |
| . | . | . | . | . | . | . | . |

# FIG. 6A

```
                    ( START )
                        │
                        ▼
            ┌───────────────────────┐
            │  ROTATE SPINDLE MOTOR  │────S501
            └───────────────────────┘
                        │
                        ▼
            ┌───────────────────────┐
            │    SET SERVO-ON ONTO   │────S503
            │    SERVO CONTROLLER    │
            └───────────────────────┘
                        │
                        ▼
            ┌───────────────────────┐
            │ OBTAIN VENDOR INFORMATION OF │────S505
            │      OPTICAL DISK      │
            └───────────────────────┘
                        │
                        ▼
            ┌───────────────────────┐
            │ EXTRACT COEFFICIENTS "a" AND │
            │ "b" CORRESPONDING TO VENDOR  │────S507
            │ INFORMATION AND LINEAR │
            │        VELOCITY        │
            └───────────────────────┘
                        │
                        ▼
            ┌───────────────────────┐
            │  LOOP COUNTER : n = 1  │────S509
            └───────────────────────┘
                        │
          ┌─────────────┤◄───────────────────┐
          │             ▼                     │
          │   ┌───────────────────────┐       │
S517      │   │   SET "n-th" LIGHT-EMITTING │────S511
          │   │  POWER AS RECORDING POWER   │
  ┌─────────┐ └───────────────────────┘       │
  │ n ← n + 1 │           │                    │
  └─────────┘             ▼                    │
          ▲   ┌───────────────────────┐       │
          │   │  PERFORM TEST RECORDING │────S513
          │   └───────────────────────┘       │
          │             │                      │
          │             ▼                      │
          │      ╱───────────────╲  ────S515   │
          └─────<   n < Nopc ?     >           
            YES  ╲───────────────╱
                        │ NO
                        ▼
            ┌───────────────────────┐
            │  OBTAIN β VALUE AND VALUE R │
            │  RELATING TO REFLECTIVITY AT │────S519
            │    EACH RECORDING POWER │
            └───────────────────────┘
                        │
                        ▼
            ┌───────────────────────┐
            │ CALCULATE VALUE K RELATING │
            │   TO RECORDING QUALITY AT  │────S521
            │    EACH RECORDING POWER │
            └───────────────────────┘
                        │
                        ▼
            ┌───────────────────────┐
            │ OBTAIN RECORDING POWER "Pop" │
            │ CORRESPONDING TO OPTIMUM │────S523
            │      VALUE "Kop"       │
            └───────────────────────┘
                        │
                        ▼
            ┌───────────────────────┐
            │ STORE RECORDING POWER "Pop" │
            │ IN RAM AS OPTIMUM RECORDING │────S525
            │        POWER           │
            └───────────────────────┘
                        │
                        ▼
                      ( A )
```

EP 1 522 998 A2

# FIG. 6B

(A)

OBTAIN CURRENT ADDRESS — S527

CALCULATE ADDRESS DIFFERENCE BETWEEN CURRENT ADDRESS AND TARGET ADDRESS — S529

S533
DRIVE SEEK MOTOR

YES / ARE SEEK MOVEMENTS NECESSARY ? — S531

NO

S537
OBTAIN CURRENT ADDRESS

NO / DOES CURRENT ADDRESS COINCIDE WITH TARGET ADDRESS ? — S535

YES

YES / HAS ALL USER DATA FOR RECORDING BEEN RECORDED ? — S539

END

NO

TURN WRITE SIGNAL ON — S541

NO / HAS A PREDETERMINED AMOUNT OF USER DATA BEEN RECORDED ? — S543

YES

TURN WRITE SIGNAL OFF, AND REPRODUCE RECORDED USER DATA — S545

OBTAIN $\beta$ VALUE AND VALUE R RELATING TO REFLECTIVITY — S547

CALCULATE VALUE K RELATING TO RECORDING QUALITY — S549

YES / $|K-Kop| \leqq \Delta K$ ? — S551

NO

CORRECT RECORDING POWER BASED ON K-Kop — S553

21

# FIG. 7

RECORDING POWER

# FIG. 8

START

ROTATE SPINDLE MOTOR ~S701

SET SERVO-ON ONTO
SERVO CONTROLLER ~S703

OBTAIN CURRENT ADDRESS ~S705

CALCULATE ADDRESS DIFFERENCE
BETWEEN CURRENT ADDRESS AND ~S707
TARGET ADDRESS

ARE SEEK MOVEMENTS
NECESSARY ? ~S709

NO

YES

DRIVE SEEK MOTOR

S711

S713

YES

DOES CURRENT ADDRESS
COINCIDE WITH TARGET
ADDRESS ?

S715

NO

OBTAIN CURRENT ADDRESS

S717

PERFORM READOUT

END

# FIG. 9

β

RECORDING POWER

# FIG. 10

R

RECORDING POWER